# EUROPEAN PATENT APPLICATION

(11) **EP 2 846 544 A1**
(43) Date of publication of application: **11.03.2015**
(21) Application number: 13784336.3
(22) Date of filing: 29.04.2013
(51) Int. Cl.: H04N 7/36, H04N 13/00

(54) **METHOD AND APPARATUS FOR ENCODING MULTI-VIEW IMAGES, AND METHOD AND APPARATUS FOR DECODING MULTI-VIEW IMAGES**

(30) Priority: 30.04.2012 KR 20120045845; 30.04.2012 KR 20120045846; 30.04.2012 KR 20120045847
(71) Applicant: HUMAX Holdings Co., Ltd, Cheoin-gu, Yongin-si, Gyeonggi-do, 449-934 (KR)
(72) Inventor: YIE, Alex Chungku, Incheon 403-762 (KR); LEE, Yong-Jae, Seoul 139-200 (KR); KIM, Hui, Namyangju-si Gyeonggi-do 472-877 (KR)
(74) Representative: Zardi, Marco
(86) International application number: PCT/KR2013/003686
(87) International publication number: WO 2013/165143

(57) **Abstract**

The present invention relates to a method and apparatus for encoding images and to method and apparatus for decoding images, wherein motion vector prediction is applied to a three-dimensional (3D) image, to an in-loop filtering method for a multi-view image, and to a method for synthesizing a medium-depth view. The method for encoding a current predicted unit in a 3D image includes: selecting the motion vector of a neighboring block as the predicted motion vector candidate of the current predicted unit, wherein the motion vector of the neighboring block belongs to the same group and has the same depth as the current predicted unit, from among the motion vectors of already encoded neighboring blocks of the current predicted block; and performing inter-prediction on the basis of the predicted motion vector candidate in order to predict the motion vector of the current predicted unit, and transmitting the predicted motion vector to a decoder. Accordingly, candidate selection for a predicted motion vector is efficiently performed for a 3D image having identical group and depth information. Also, the complexity of a deblocking process can be reduced. The amount of transmitted depth view data can also be reduced.

## Description

### BACKGROUND OF THE INVENTION

### Field of the invention

The present invention relates to a method and apparatus for encoding multi-view images, and a method and apparatus for decoding multi-view images, and more particularly, to a method and apparatus for encoding/decoding multi-view images by predicting a motion vector, synthesizing an intermediate -depth view of the multi-view images, and in-loop filtering the multi-view images.

### Related Art

Generally, in an image compression method, in order to enhance compression efficiency, inter-prediction and intra prediction technologies for removing redundancy of pictures is used.

A method of encoding an image by using inter prediction is a method of compressing an image by removing temporal redundancy between pictures, and a representative example is a motion compensation prediction encoding method.

The motion compensation prediction encoding generates a motion vector (MV) by searching for an area which is similar to the block which is currently encoded in at least one reference picture which is located at the front and/or back of the currently encoded picture, DCT (discrete cosine transform)-converts and quantizes the residue of the current prediction unit and the prediction unit which is obtained by performing motion compensation by using the generated motion vector, and then entropy-encodes and transmits the quantized residue.

In the case of the motion compensation inter prediction, one picture is divided into a plurality of blocks having a predetermined size so as to generate a motion vector (MV) and performs motion compensation by using the generated motion vector. Individual motion parameters for respective prediction blocks, which are obtained by performing motion compensation, are transmitted to the decoder.

In the case of a 3D image, each pixel includes depth information as well pixel information due to the characteristics of the image, and depth information is obtained in the encoder, and then the multi-view video image information and depth information are transmitted to the decoder. At this time, motion vector prediction is used. The motion vector of the neighboring block of the current prediction unit is used as a candidate block of the prediction motion vector, and in the case of 3D image having the depth information, a method of efficiently applying the prediction motion vector is needed.

Further, in H.264/AVC standard, when an image is encoded as a low bit rate, in order to solve the problem that the image is stored in a frame memory in a state where a block distortion is generated in a decoded image and is then encoded with reference to the image including the block distortion in the motion compensation process of the next picture, and thus the deterioration of the image quality is spread, adaptive deblocking filtering for removing the block distortion phenomenon is used before storing the decoded image in the frame memory. That is, a block boundary is blurred with a predetermined strength in order to reduce distortion in the boundary between blocks.

Adaptive deblocking filtering at H.264/AVC outputs a good decoded image by preventing the block distortion of the image from being transmitted to the decoded image in a state where the block distortion is included in the reference image by adaptively applying each deblocking filter at the position where the block distortion may be easily generated and the position where the block distortion may not be easily generated.

In the case of the multi-view video, the current view and a reference view taken by a spatially different camera exist. When the deblocking process of a specific block of the current view is performed to encode the multi-view image in order to be compatible with the existing H.264/AVC video, if the deblocking filtering intensity of a specific block of the current view is obtained independently from the deblocking filtering intensity of the block corresponding to the reference view, the overall complexity may be increased. In particular, in the decoder, the process of the deblocking filter occupies a significant part of decoder complexity, and thus if the deblocking filter intensity of a specific block of the current view is obtained independently from the deblocking filter intensity of the block corresponding to the reference view in order to decode the multi-view image, the complexity of the decoder may significantly increase.

Further, in the case of the multi-view video, at least one reference view, which is taken by a camera of a visual point which is spatially different from the current view, exists, and when encoding and decoding the multi-view image, if the multi-view image data (or texture) is transmitted from the encoder to the decoder for all views, the encoding efficiency may be lowered due to the increase of data which is transmitted to the decoder.

Further, in the case of encoding and decoding the multi-view image, if depth view data is transmitted from the encoder to the encoder for all views, the data, which is transmitted to the decoder, may increase, and thus the encoding efficiency may be deteriorated.

### SUMMARY OF THE INVENTION

An object of the present invention is to provide a method and apparatus for encoding an image through motion vector prediction which may be applicable to a 3D image.

Another object of the present invention is to provide a method and apparatus for decoding an image through motion vector prediction which may be applicable to a 3D image.

Another object of the present invention is to provide a method of in-loop-filtering a multi-view image for reducing complexity at the time of coding the multi-view image.

Another object of the present invention is to provide a method of performing an intermediate depth view synthesis of a multi-view image for enhancing encoding efficiency by reducing the amount of data which is transmitted from an encoder to a decoder at the time of coding a multi-view image.

In accordance with an aspect of the present invention, a method of encoding a current prediction unit in a 3-dimensional image includes selecting a motion vector of a neighboring block which satisfies at least one of a same group and a same depth as that of the current prediction unit from among already encoded neighboring blocks of the current prediction unit, as a candidate prediction motion vector of the current prediction unit, and predicting a motion vector of the current prediction unit by performing an inter prediction based on the candidate prediction motion vector so as to transmit the predicted motion vector to a decoder.

The method may further include obtaining the depth view of the second view by using a texture of the second view which has been generated through the intermediate view synthesis with one of the depth view of the first view and the depth view of the third view which have been received from the encoder.

Motion information for the depth view of the second view may reuse motion information of a block co-located to a texture view component of the second view.

In accordance with another aspect of the present invention, a method of decoding a current prediction unit in a 3-dimensional image includes entropy-decoding, inverse-quantizing, and inverse-transforming a received bit stream, selecting a motion vector of a neighboring block which satisfies at least one of a same group and a same depth as that of the current prediction unit from among already encoded neighboring blocks of the current prediction unit based on the inverse-transformed bit stream, as a candidate prediction motion vector of the current prediction unit, and reconstructing the image by predicting the motion vector of the current prediction unit by performing an inter prediction based on the candidate prediction motion vector.

In accordance with another aspect of the present invention, a method of in-loop-filtering a multi-view image includes referring to a block corresponding to a reference view for a specific block of a current view, and setting a deblocking intensity of a specific block of a current view by performing scaling according to a distance between the specific block of the current view and the block corresponding to the reference view.

When receiving a predetermined flag from the encoder, motion information of a block co-located to a texture view component of the second view may be reused as motion information for the depth view of the second view.

In accordance with another aspect of the present invention, a method of performing a intermediate depth view synthesis for a multi-view image having a texture view and a depth view for each of a first view, a second view, and a third view by a decoder includes performing an intermediate view synthesis for a the texture view of the first view and the texture view of the third view which are received from an encoder, and obtaining the texture view of the second view from the texture view of the first view and the texture view of the third view through the intermediate view synthesis.

### BRIEF DESCRIPTION OF THE DRAWINGS

FIG. 1 is a conceptual diagram illustrating a structure of a recursive coding unit according to an embodiment of the present invention.
FIG. 2 illustrates a neighboring block as a spatial candidate.
FIG. 3 illustrates a neighboring block as a temporal candidate.
FIG. 4 is a block diagram schematically illustrating an apparatus for encoding a 3D image according to an embodiment of the present invention.
FIG. 5 is a flowchart schematically illustrating a method of encoding a 3D image according to an embodiment of the present invention.
FIG. 6 is a block diagram of an encoder for processing an in-loop filtering for a multi-view image according to an embodiment of the present invention.
FIG. 7 is a flowchart illustrating an in-loop filtering method for a multi-view image according to an embodiment of the present invention.
FIG. 8 is a flowchart illustrating an in-loop filtering method for a multi-view image according to another embodiment of the present invention.
FIG. 9 is a conceptual diagram illustrating a process of an intermediate view synthesis in a decoder by using two views which have been transmitted to the decoder.
FIG. 10 is a conceptual diagram illustrating a process of an intermediate depth view synthesis in a decoder by using 2 depth views which have been transmitted to the decoder.
FIG. 11 is a conceptual diagram illustrating a process of an intermediate depth view synthesis in a decoder by using one depth view which has been transmitted to a decoder according to an embodiment of the present invention.
FIG. 12 is a conceptual diagram illustrating a process of an intermediate depth view synthesis in a decoder by using one depth view which has been transmitted to the decoder according to another embodiment of the present invention.
FIG. 13 is a conceptual diagram illustrating a process of an intermediate depth view synthesis in a decoder by using one depth view which has been transmitted to the decoder according to another embodiment of the present invention.
FIG. 14 is a block diagram illustrating an encoder for processing the operation of the intermediate depth view synthesis for a multi-view image according to an embodiment of the present invention.

### DESCRIPTION OF EXEMPLARY EMBODIMENTS

The present invention may be modified in various manners and various embodiments are possible, and thus specific embodiments are illustrated in the drawings and are described in detail.

However, the description is not to limit specific embodiments, but should be understood as including all modifications, equivalents, and substitutes within the scope of the present invention.

Such terms as "first" and "second" may be used to described various elements, but the elements are limited by such terms. The terms are used only to distinguish one element from another. For example, the first element may be called the second element or the second element may be called the first element within the scope of the present invention. The expression "and/or" includes one or more a plurality of items.

When an element is mentioned as being connected or linked to another element, it may mean that the element is directly connected or linked to the another element, but it is also possible that further another element exists between the element and the another element. On the other hand, when an element is mentioned as being directly connected or directly linked to another element, it should be understood that there is no other element between the element and the another element.

The terms used in the present specification are used only to describe specific embodiments, but are not used to limit the scope of the present invention. A singular expression includes a plurality expression unless clearly stated otherwise. Such terms as "include" and "have" are used describe the fact that the features, numbers, steps, operations, parts, or a combination thereof exist, but are not used to exclude the possibility of existence or addition of other features, numbers, steps, operations, parts, or a combination thereof.

Unless defined otherwise, all terms used here including technical and scientific terms have the same meaning as that is generally understood by one of ordinary skill in the art. The terms which are generally used and are defined in a dictionary should be understood as having the meaning as that in the context of the related art, and unless clearly defined in the present specification, the terms should not be understood in an excessively idealistic or formalistic manner.

Hereinafter, embodiments of the present invention will be described in detail with reference to the attached drawings. When explaining the present invention, the same refer numeral is used to indicate the same element in the drawings for better understanding of the present invention, and the overlapping explanation for the same element is omitted.

### Motion vector prediction by using depth information

In an embodiment of the present invention, encoding and decoding such as inter prediction, intra prediction, transformation, quantization, and encoding coding may be performed by using a macroblock as in H.264/AVC, encoding and decoding may also be performed by using a recursive coding unit (CU) structure which is explained below.

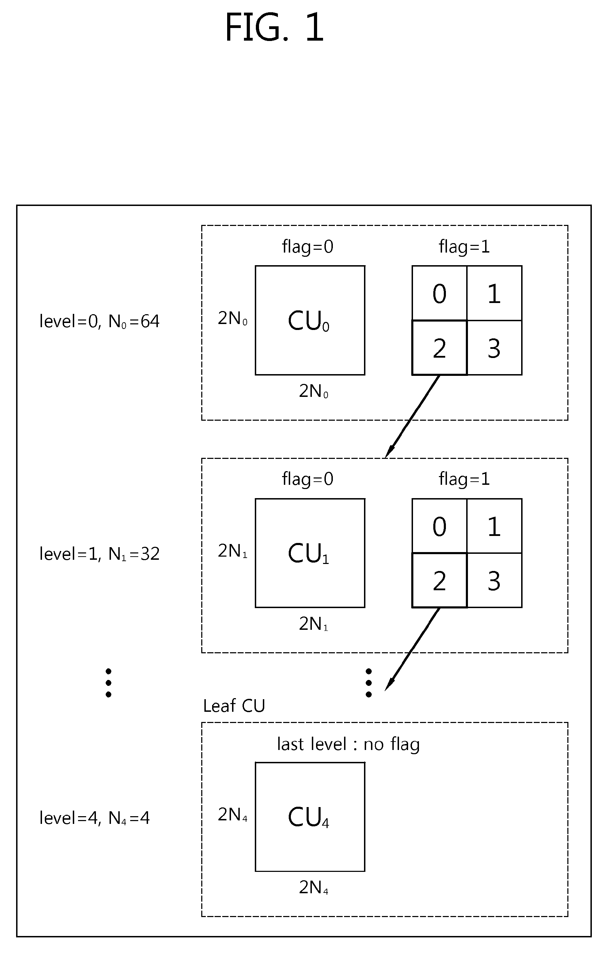

FIG. 1 is a conceptual diagram illustrating a structure of a recursive coding unit according to an embodiment of the present invention.

Referring to FIG. 1, each coding unit (CU) may have a square-shaped pixel size and have a variable size of 2N x 2N (unit pixel). Inter prediction, intra prediction, transformation, quantization, deblocking filtering, and entropy encoding may be formed in coding units.

The coding unit (CU) may include the largest coding unit (LCU), the minimum coding unit (smallest coding unit (SCU)), and the size of the maximum coding unit (LCU) and the smallest coding unit (SCU) may be indicated by 8 or higher 2^{k}.

The size of the coding unit may be 8 or higher 2^{k} such as 8 x 8, 16 x 16, 32 x 32, and 64 x 64.

The coding unit according to an embodiment of the present invention may have a recursive structure. FIG. 1 shows a case where the size (2N₀) of CU₀ which is the maximum coding unit (LCU) is 128 (N₀=64) and the maximum layer level or layer depth is 5. The recursive structure may be expressed through a series of flags. For example, when the flag value of the coding unit (CUₖ), in which the layer level or layer depth is k, is 0, the coding for the coding unit (CUₖ) is performed for the current layer level or layer depth.

Further, when the flag value is 1, the coding unit (CUₖ), in which the current layer level or layer depth is k, is divided into 4 independent coding units (CUₖ₊₁), and the layer level or layer depth of the divided coding unit (CUₖ₊₁) becomes k + 1 and the size becomes Nₖ₊₁Nₖ₊₁. In this case, the coding unit (CUₖ₊₁) may be represented by the sub-coding unit. The coding unit (CUₖ₊₁) may be recursively processed until the layer level or layer depth of the coding unit (CUₖ₊₁) reaches the maximum allowable layer level or layer depth. When the layer level or layer depth of the coding unit (CUₖ₊₁) is the same as the maximum allowable layer level or layer depth (in FIG. 1, a case where the value is 4), further division is not allowed.

The size of the largest coding unit (LCU) and the smallest coding unit (SCU) may be included in a sequence parameter set (SPS). The sequence parameter set (SPS) may include the maximum allowable layer level or depth level of the maximum coding unit (LCU). For example, in the case of FIG. 1, when the maximum allowable layer level or depth level is 5 and the size of one side of the largest coding unit (LCU) is 128 (unit: pixel), five kinds of coding unit sizes (128 x 128 (LCU), 64 x 64, 32 x 32, 16 x 16, and 8 x 8 (SCU)) are possible. That is, if the size of the maximum coding unit (LCU) and the maximum allowable layer level or layer depth is given, the allowable coding unit size may be determined.

Likewise, if the hierarchical division process of the coding unit is completed, inter prediction or intra prediction may be performed for the leaf coding unit of the coding unit layer tree without further division, and such a leaf coding unit is used as the prediction unit (PU) which is the basic unit of the inter prediction or intra prediction. Further, partition division may be performed for the leaf coding unit for inter prediction or intra prediction.

According to a 3D image encoding method according to an embodiment of the present invention, when encoding a 3D image, the resolution of the texture and depth may be different for encoding and transmission, and decoding may be performed when decoding the 3D image. Here, the texture means color. For example, the depth may be encoded as the 1/2 of the resolution of the texture for transmission and the decoding may be performed when decoding the 3D image. Further, the depth is encoded with the 1/k resolution of the texture for transmission, and the k value may be variably changed.

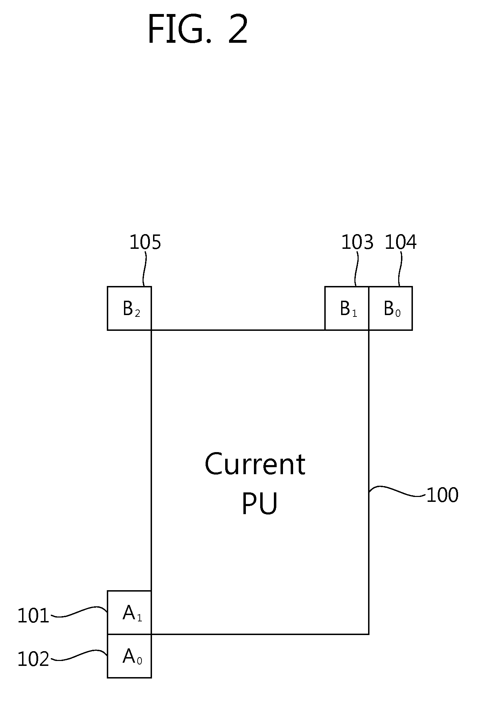

FIG. 2 illustrates a neighboring block as a spatial candidate. Generally, a neighboring block may include various blocks contacting the current prediction unit. For example, both the neighboring block contacting the left side of the current prediction unit or the neighboring block contacting the upper side of the current prediction unit may be used as a spatial candidate. In particular, in the encoding method having a hierarchical structure, the size of the neighboring block may not be constant, and when contacting the current prediction block, the neighboring blocks having a different block size may also be utilized as a neighboring block which is used in inter prediction.

Referring to FIG. 2, spatial neighboring blocks, which may be used at the time of inter prediction for the current prediction unit in the 3D image encoding method according to an embodiment of the present invention, may include block A1 101, block A0 102, block B1 103, block B0 104, and block B2 105. The blocks 101, 102, 103, 104, and 105 are blocks having the highest probability as the candidate of the prediction motion vector when predicting the motion vector by experimental inter prediction. The blocks 101, 102, 103, 104, and 105 determine whether it is possible to be used as a prediction motion vector by setting the priority at the time of motion vector prediction. The priority order may be used as such order as block A1 101, block A0 102, block B1 103, block B0 104, and block B2 105, and two available motion vectors may be selected as the final candidate prediction motion vector by determining whether it is possible to be sequentially used as the candidate prediction motion vector based on the priority order so that two available motion vectors may be selected as the final candidate prediction motion vector.

Though not illustrated in the drawings, according to another embodiment of the present invention, the spatial neighboring block of the current prediction unit 100 in the 3D image encoding method may include a block contacting the left side of the current prediction unit 100, a block contacting the upper side of the current prediction unit 100, and a block at the upper right side of the current prediction unit 100.

Furthermore, according to another embodiment of the present invention, in a 3D image encoding method, the spatial neighboring block of the current prediction unit 100 may include a block contacting the uppermost left side of the current prediction unit 100, a block contacting the upper leftmost side of the current prediction unit 100, and a block at the upper right side of the current prediction unit 100.

In another embodiment of the present invention, a prediction motion vector of the current prediction unit 100 may be generated by using the central value of each of the horizontal element and the vertical element by using the motion vector of the neighboring block. In particular, in another embodiment of the present invention, the prediction motion vector of the current prediction unit 100 may be generated by using the median of each of the horizontal element and the vertical element of motion vectors of the neighboring blocks for the neighboring blocks of the current block in the same manner as the manner stipulated in H.264/AVC.

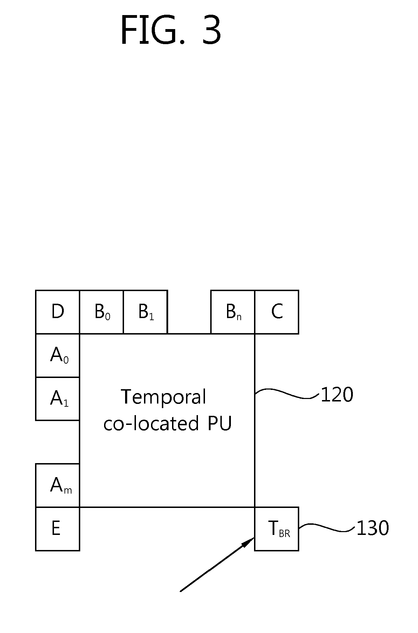

FIG. 3 illustrates a neighboring block as a temporal candidate. As illustrated in FIG. 3, a temporal neighboring unit, which may be used in inter prediction for the current prediction unit in the 3D image encoding method according to an embodiment of the present invention, may include block T_{BR} 130. Referring to FIG. 3, block T_{BR} 130 is a block which contacts the right side of the neighboring block of the lower rightmost side from among neighboring blocks of the block 120 co-located to the current prediction unit in the reference picture. The temporal candidate block may consider only one block T_{BR} 130 as the candidate of the prediction motion vector.

Referring to FIGS. 2 and 3, a total of 6 neighboring blocks including a block 101 at the lowest left side of the current prediction unit 100, a block 102 contacting the lower side of the block 101, a block 103 at the rightmost side of the upper side of the current prediction unit 100, a block 104 contacting the right side of the block 103, a block 104 contacting the upper side of the block 103, a block 105 at the upper left side of the current prediction unit 100, and a block 130 which is located at a diagonal line at the lower right side co-located to the current prediction unit of the previous reference image, may be used in predicting the motion vector of the current prediction unit 100. That is, the motion vectors of the total of 6 neighboring blocks become a prediction motion vector candidate group which determines the prediction motion vector of the current prediction unit 100. In some situations, there may be neighboring blocks which not available for predicting the motion vector of the current prediction unit, and in this case, such neighboring blocks are not used in the inter prediction.

When not available, for example, when the neighboring block is not an inter prediction, i.e., when the neighboring block is an intra prediction, there is no prediction motion vector value, thereby not being available, and when the motion vector value of the neighboring block including the edge within the image is significantly changed, it is not appropriate to use the motion vector value as the candidate of the prediction motion vector of the current prediction unit 100, and thus it can be classified as an unavailable case.

Thereafter, as described above, final three prediction motion vector candidate can be determined as the usable prediction motion vector from among 6 prediction motion vector candidates group. Here, 3 prediction motion vector candidates may include 2 spatial candidates and 1 temporal candidate. When generating a bit stream, the correspondence between respective bits and motion vectors may be seen from the following table.

**Table 1**

| Index | bin |
|---|---|
| S0 | 0 |
| S1 | 10 |
| S2 | 11 |

Referring to Table 1, it is evident that only a total of three prediction motion vectors can be stored. Upper two include motion vectors of spatial neighboring blocks A₁ to B₂, and the remaining one includes the motion vector of the temporal candidate block 130. Further, in final three prediction motion vectors, indexes of S0, S1, and S2 are granted in order. The prediction motion vector of the current prediction unit 100 is selected from among these three selected prediction motion vector candidates.

At this time, referring to Table 1 in which the candidate prediction motion vector becomes bits, the index of the first motion vector is determined as 1 bit. Hence, the two candidates in higher order are selected as the final prediction motion vector candidate and relatively less bits are allocated to the index of the prediction motion vector candidate in the first priority order, and thus when a result other than the predetermined priority comes out, a lot of bits are used in the index coding of the prediction motion vector are used, thereby lowering the transmission efficiency.

Hence, it is important in terms of data efficiency first to identify a candidate with the highest probability of selection and grant the first index to the motion vector. At this time, a generally usable priority may be defined as the first priority. The first priority order is an experimentally determined priority order, and according to FIG. 3, the order is block A1 101 -> block A0 102 -> block B1 103 -> block B0 104 -> block B2105, and if the motion vector of the neighboring block is an available block one by one in this order, the index may be granted to the motion vector of the block. If not available, the next order is used. Hence, the priority order, which determines the availability of the motion vector is important. The prediction motion vector of the current prediction unit 100 may become different according to the order of the motion vector which is disclosed in the priority order. Hence, there may be a method of flexibly changing the order of referring to the neighboring blocks according to the characteristics of the image. That is, if a neighboring block with the highest probability of selection as the prediction motion vector among neighboring blocks of the first candidate becomes a block for receiving the index for the first time, a gain may be obtained in terms of the transmission efficiency.

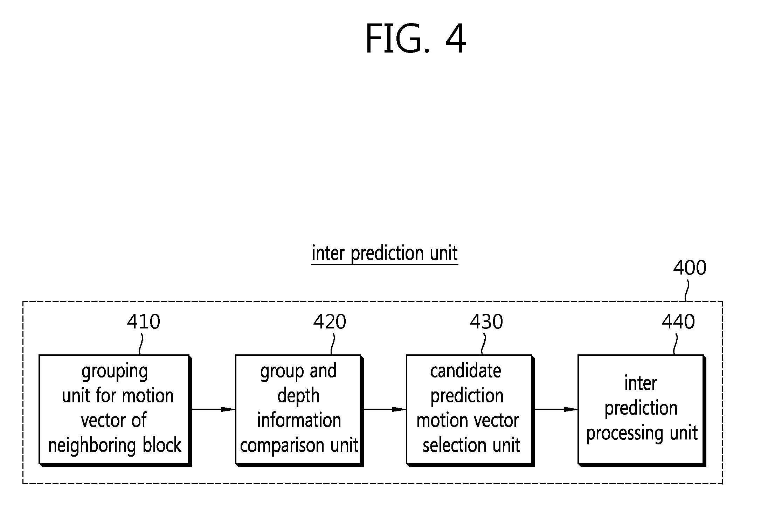

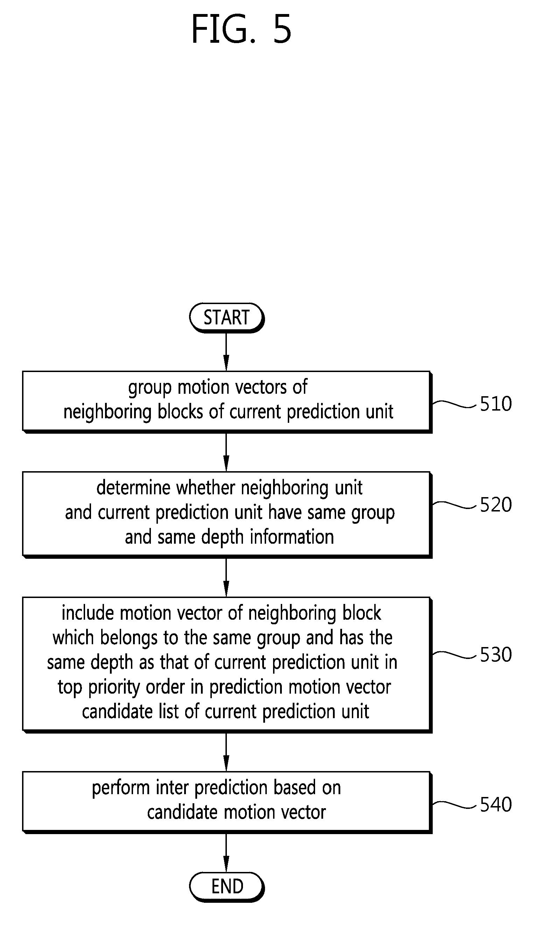

FIG. 4 is a block diagram schematically illustrating an apparatus for encoding a 3D image according to an embodiment of the present invention, and FIG. 5 is a flowchart schematically illustrating a method of encoding a 3D image according to an embodiment of the present invention.

As illustrated in FIG. 5, according to an embodiment of the present invention, the current prediction unit 100 and the neighboring block are grouped according to predetermined standards (step 510), it is determined whether the current prediction unit 100 and the neighboring block have the same group and same depth information (step 520), then only when the current prediction unit 100 and the neighboring block belong to the same group and at the same time the depth of the current prediction unit 100 is the same as the depth of the neighboring block, the motion vector of the neighboring block having the same depth as that of the current prediction unit 100 is determined as the top priority in the prediction motion vector candidate list of the current prediction unit (step 530), and the inter prediction may be performed based on the candidate motion vector (step 540).

For example, the types of the motion prediction schemes include an inter-view prediction scheme between the current view and the reference view taken by a spatially different camera, and a temporal prediction scheme between the current prediction unit and the corresponding block of the temporally pre or post reference picture of the current picture. That is, the grouping as two groups of the inter-view prediction group and the temporal prediction group may be performed.

In this case, when the current prediction unit 100 uses the inter-view reference picture and the neighboring block uses the inter-view prediction, it may be understood that the current prediction unit 100 belongs to the same inter-view prediction group. Further, when the current prediction unit uses the temporal prediction and the neighboring block uses the temporal prediction, it may be understood that the current prediction unit belongs to the same temporal prediction group.

When using the inter-view reference picture, only the neighboring blocks, which use the inter-view prediction, are grouped as the inter-view prediction group, and the neighboring blocks, which do not use the inter-view prediction from among the neighboring blocks of the current prediction unit 100, are indicated as "not available" in the motion vector prediction (MVP), and then they may not be used in the motion vector prediction of the current prediction unit 100. Here, the motion vector prediction of the current prediction unit 100 may be set to have the median of the motion vectors of the neighboring blocks of the current prediction unit 100 when all the neighboring blocks of the current prediction unit 100 may be available in the motion vector prediction.

Further, when the current prediction unit uses the temporal prediction, only the neighboring blocks, which use the temporal prediction, are grouped as the temporal prediction group, and the neighboring blocks, which use the temporal prediction, are indicated as "not available" to the motion vector prediction (MVP), and then they may not be used in the motion vector prediction of the current prediction unit 100.

According to a 3D image encoding method according to an embodiment of the present invention, the motion vector of the neighboring block having the same depth as that of the current prediction unit 100 is used as the prediction motion vector candidate of the current prediction unit 100 based on the predetermined grouping and depth, and thus the accuracy as the prediction motion vector of the current prediction unit 100 may be improved.

The 3D image encoding method according to another embodiment of the present invention may consider only the depth information of the neighboring blocks for the efficient encoding of the 3D image in using the neighboring block. In the case of the 3D image, the depth information may be obtained from the encoder, and the depth information and the multi-view video image may be transmitted together to the encoder.

Hence, as previously described, neighboring blocks 101, 102, 103, 104, and 105 of FIG. 2 or neighboring blocks which are used in H.264/AVC are utilized, and the prediction motion vector candidates may be determined based on the depth information of the neighboring block.

That is, neighboring blocks having the same depth information as that of the current prediction unit 100 may be estimated as the same object as that of the current prediction unit 100, and thus it may be estimated as having the same motion vector. Hence, the depth information, which is the 3D characteristics, may be combined with a general motion vector selection scheme so as to be used as the candidate of the motion vector prediction of the current prediction unit 100. That is, the prediction value of the motion vector of the current prediction unit 100 may be used.

According to another embodiment of the present invention, candidate blocks for two spatial prediction motion vectors may be selected from among neighboring blocks of the current prediction unit 100, for example, neighboring blocks contacting the left side and the neighboring blocks contacting the upper side. At this time, the neighboring blocks having the same depth as that of the current prediction unit 100 may be selected as the candidate blocks for the prediction motion vector based on depth information of the neighboring block.

According to another embodiment of the present invention, two spatial prediction motion vector candidates may be selected from among motion vectors of the neighboring blocks 101, 102, 103, 104, and 105, and comparison with the current prediction unit 100 may be performed by extracting the depth information of the neighboring blocks 101, 102, 103, 104, and 105. At this time, when block A1 101 has the depth of 2, A0 102 has the depth of 1, B1 103 has the depth of 4, B0 104 has the depth of 3, and B2 105 has the depth of 2, and the current prediction unit 100 has the depth of 2, the motion vectors of A1 101 and B2 105 having the same depth of 2 as that of the current prediction unit 100 may be selected as candidates for motion vector prediction of the current prediction unit 100. At this time, when there are two or more neighboring blocks having the same depth information, the spatial candidates of the prediction motion vector may be selected according to the first priority order.

According to another embodiment of the present invention, as a result of comparison, when there is no neighboring block having the same depth as that of the current prediction unit 100, availability may be determined in the order of block A1 101 -> block A0 102 -> block B 1 103 -> block B0 104 -> block B2 105 by using the first priority order which is a general prediction motion vector candidate selection scheme so as to select two spatial candidates.

According to another embodiment of the present invention, as a result of the comparison, when there is no neighboring block having the same depth, the motion vector of the neighboring block having the smallest difference in depth with the current prediction unit 100 based on the depth difference with the current prediction unit 100 may be used as the candidate of the prediction motion vector for the current prediction unit 100.

As described above, the spatial neighboring block of the current prediction unit 100 in the 3D image encoding method may include a block contacting the left side of the current prediction unit 100, a block contacting the upper side of the current prediction unit 100, and a block at the upper right side of the current prediction unit 100, or may include a block contacting the uppermost left side of the current prediction unit 100, a block contacting the upper leftmost side of the current prediction unit 100, and a block contacting the upper right side of the current prediction unit 100.

In some cases, the prediction motion vector of the current prediction unit 100 may be generated by using the median of each of the horizontal element and the vertical element by using the motion vector of the neighboring vector.

According to a 3D image encoding method according to another embodiment of the present invention, the motion vector of the neighboring block having the same depth as that of the current prediction unit 100 is used as the prediction motion vector candidate of the current prediction unit 100, and thus the accuracy as the prediction motion vector of the current prediction unit 100 may be improved, and particularly, the first selected prediction motion vector becomes bits as low bits, and thus the transmission efficiency is enhanced.

FIG. 4 is a block diagram schematically illustrating an apparatus for encoding a 3D image according to an embodiment of the present invention. As illustrated in FIG. 4, a 3D image encoding device 400 according to an embodiment of the present invention may include grouping unit 410 for a motion vector of a neighboring block, a group and depth information comparison unit 420, a candidate prediction motion vector selection unit 430, and an inter prediction processing unit 440.

Referring to FIG. 4, grouping unit 410 for the motion vector of the neighboring block, groups the motion vectors of neighboring blocks A0, A1, B0, B1, and B2 of the current prediction unit 100 as two groups of the inter-view prediction and the temporal prediction group.

When the current prediction unit 100 uses the inter-view reference picture, only the neighboring blocks which use the inter-view prediction are grouped as the inter-view group, and the neighboring blocks which do not use the inter-view prediction among the neighboring blocks of the current prediction unit 100 are indicated as "not available" in the motion vector prediction (MVP) so that they may not be used in the motion vector prediction of the current prediction unit 100. Here, the motion vector prediction of the current prediction unit 100 may be set to have the median value of the motion vectors of the neighboring blocks of the current prediction unit 100 when the neighboring blocks of the current prediction unit 100 may be available in motion vector prediction.

Further, when the current prediction unit 100 uses the temporal prediction, only the neighboring blocks which use the temporal prediction are grouped as the temporal prediction group, and the neighboring blocks which use the temporal prediction are indicated as "not available" in the motion vector prediction so that they may not be used in the motion vector prediction of the current prediction unit.

The group and depth information comparison unit 420 compares whether both the current prediction unit 110 and the neighboring block belong to the same group and compares the depth information of the current prediction unit 100 and the depth information of the neighboring block. In detail, when the current prediction unit 100 uses the inter-view reference picture and the neighboring block uses the inter-view prediction, it may be determined that the current prediction unit 100 belongs to the same inter-view prediction group. Further, when the current prediction unit 100 uses the temporal prediction unit and the neighboring block uses the temporal prediction, it may be determined that the current prediction unit 100 belongs to the same temporal prediction group.

As a result of the comparison, the candidate prediction motion vector selection unit 430 selects the motion vector of the neighboring block having the same depth as that of the current prediction unit 100 as the top priority in the prediction motion vector candidate list of the current prediction unit only in the case where both the current prediction unit 100 and the neighboring block belong to the same group, and the depth of the current prediction unit 100 and the depth of the neighboring block are the same. The candidate motion vector list of the current prediction unit may be transmitted from the 3D image encoder to the 3D image decoder.

The inter prediction processing unit 440 performs inter prediction based on the candidate motion vector list which is selected in the candidate prediction motion vector selection unit 430, and obtains the motion vector residue between the actual motion vector of the current prediction unit 100 and the predicted motion vector. The motion vector residue of the current prediction unit may be DCT (discrete cosine transform)-converted and quantized, and then be transmitted from the 3D image encoder to the 3D image decoder. The motion vector residue of the current prediction unit may be transmitted from the 3D image encoder to the 3D image decoder.

In the 3D image decoder, the original image may be reconstructed by obtaining the motion vector of the current prediction unit by using the motion vector difference and the candidate motion vector list which is extracted from the candidate motion vector list of the current prediction unit which is transmitted from the 3D image encoder.

In the 3D image decoding apparatus and method according to embodiments of the present invention, the motion vector is generated in block units in the motion prediction unit by reconstructing the motion vector of the block by using the bit stream which is transmitted from the above-described encoder, and the motion compensation unit performs the motion compensation by using the reference picture and the motion vector which is generated in the motion prediction unit.

When applying the 3D image encoding/decoding method to an image having the high definition (HD) level or higher resolution, the number of blocks per picture increases, and thus when transmitting the motion parameter to the decoder for each prediction block, the amount of motion parameters significantly increases, thereby lowering the coding efficiency. Hence, there is a need for a method for enhancing the coding efficiency.

In the 3D image encoding/decoding method of the present invention, when the size of the coding unit (PU) is, for example, 2N x 2N (N is a natural number and the unit is pixel), if the prediction mode is the inter-prediction mode, asymmetric partition in the horizontal direction may be performed to perform inter-prediction so as to be divided into the partition PU0 (P11a) of the 2N X nU (here, nU = 2N X 1/4) size and the partition PU1 (P21a) of the 2N X nD (here, nD = 2N X 3/4) size or may be divided into partition PU0 (P12a) of the 2N X nU (here, nU = 2N X 3/4) size or the partition PU1 (p22a) of the 2N X nD (here, nD = 2N X 1/4) size. Further, the 2N X 2N coding unit may be divided into partition PU0 (P13a) of the nL X 2N (here, nL = 2N X 1/4) size and partition PU1 (P23a) of nL X 2N size or may be divided into partition PU0 (P14a) of nL X 2N (here, nL = 2N X 3/4) size or partition PU1 (P24a) of nR X 2N (here, nR = 2N X 1/4) size by asymmetric partition in the vertical direction.

All information including the motion parameter related to inter prediction (motion vector, motion vector difference, reference picture index, reference picture list, etc.) is transmitted to the decoder in prediction units which are the basic units of the inter prediction or in partitioned prediction units. Here, the reference picture list may have list 0 in the case of the previous picture (N-1th picture) of the current picture (Nth picture) and may have list 1 in the case of the following picture (N+1th picture) of the current picture (Nth picture). The reference picture index represents the reference picture index for the current prediction unit.

In the case of a high resolution image having a HD level or higher resolution, the number of prediction blocks (non-partitioned prediction unit or partitioned prediction unit) per picture increases, and thus when the motion parameter is transmitted to the decoder for each prediction block (non-partitioned prediction unit or partitioned prediction unit), the amount of transmitted motion parameters significantly increases, thereby lowering the coding efficiency. Hence, there is a need for a method for enhancing the coding efficiency.

In order to solve the above problem, the inter-encoding may be performed by using block merging. When the neighboring block of the previously encoded current block has the same motion parameter (motion vector, motion vector difference, reference picture index, reference picture list, etc.) as the current block X, the block merging may enhance the coding efficiency by reducing the amount of motion parameters which are transmitted to the decoder without separately transmitting the motion parameter of the current block by transmitting the blocks, which have been obtained by merging the current block with the neighboring blocks having the same motion parameter, to the decoder as the same motion parameter.

For example, after one picture is hierarchically split into end coding units, i.e., minimum coding units (SCU), if the current block (prediction unit) X, which is the minimum coding unit (SCU) has the same motion vector as that of the previously encoded left side neighboring block A0 and the upper side neighboring block B0, blocks A0, B0, and X are merged and are then transmitted to the decoder as the same motion parameter. Here, the motion parameter may include a motion vector, a motion vector difference, a reference picture index, and a reference picture list. In this case, a merging flag indicating whether the block merging has been applied may be transmitted to the decoder.

In the 3D image encoding of the present invention, at the inter prediction, if asymmetric partition is performed in the horizontal direction in order to perform inter prediction, a common merging candidate block list including a predetermined number of common merging candidate blocks, which are selected from neighboring blocks of the current coding unit which is asymmetrically partitioned as the first prediction unit and the second prediction unit, may be formed, and at least one candidate block may be selected from the common merging candidate block list for each of the first prediction unit PU0 and the second prediction unit PU1 and the selected candidate block information may be transmitted to the decoder for each of the first prediction unit PU0 and the second prediction unit PU1. The common merging candidate block list may include merging candidate blocks which are commonly used when performing block merging for the first prediction unit PU0 and the second prediction unit PU1. Here, the common merging candidate blocks of the second prediction unit may be formed of neighboring blocks which may be formed even before reconstructing the motion parameter of the first prediction unit. The size of the current coding unit may perform the block merging only in the case of specific coding unit sizes such as 4 x 4, 8 x 8, 16 x 16, and 32 x 32.

Further, when asymmetric partition is performed in a horizontal direction in order to perform inter prediction, in the case of the 3D image decoding of the present invention, a common merging candidate block list including a predetermined number of common merging candidate blocks selected from neighboring blocks of the current coding unit (CU) which has been asymmetrically partitioned into the first prediction unit (PU0) and the second prediction unit (PU1) is formed, a motion vector is generated in block units by reconstructing the motion parameter of the merged block by using at least one candidate block selected from the common merging candidate block list for each of the first prediction unit (PU0) and the second prediction unit (PU1), and the motion compensation may be performed by using the generated motion parameter and the reference picture. Here, the common merging candidate blocks of the second prediction unit may be composed of only neighboring blocks which may be formed even before reconstructing the motion parameter of the first prediction unit. The size of the current coding unit may perform the block merging only in the case of specific coding unit sizes such as 4 x 4, 8 x 8, 16 x 16, and 32 x 32.

Hereinafter, a method of processing a first asymmetric partition (PU0) and a second asymmetric partition (PU1) in parallel by using a common merge candidate list when applying asymmetric partition at the time of inter prediction in the 3D image encoding/decoding of the present invention will be descried in detail.

First, the 2N x 2N coding unit (PU) is partitioned into partition PU0 block (prediction unit) of nL X 2N (here, nL = 2N X 1/4) and partition PU1 block (prediction unit) of nR X 2N (here, nR = 2N X 3/4) size in the vertical direction. Hereinafter, PU0 is called the first prediction unit PU1 is called the second prediction unit. Here, the size of the coding unit (PU) is 2N X 2N (N is a positive integer), and N may be, for example, 2, 4, 8, 16 or 32. In order to allow parallel processing for the asymmetrically partitioned prediction units PU0 and PU1, the scheme of using common merge candidate blocks may be applied to all coding units (PU) in which N is 2, 4, 8, 16, and 32, or may be applied to only coding units (PU) in which N has a specific value such as one of 2, 4, 8, 16, and 32. For example, when the largest coding unit (LCU) is 64 x 64, as the size of the coding unit (CU) decreases, the number of times of forming a common merge block list including common merge candidate blocks may increase for the entire 64 x 64 block, and in such a case, when applying the common merge candidate list for the case where the size of the coding unit (CU) is small, the number of times for forming the common merge candidate list may be significantly reduced, thereby reducing complexity. Further, when parallel process is performed by further applying the common merge candidate list, the performance loss is enlarged. Hence, in consideration of both the performance loss and complexity, for example, when the minimum size of the prediction unit (PU) is 4 x 4, the complexity may be significantly reduced without a large performance loss by using the common merge candidate blocks only when the size of the coding unit (CU) is 8 x 8 (selecting 4 which is smallest except 2 from among 2, 4, 8, 16, and 32).

Further, the largest coding unit (LCU) may be partitioned into a plurality of non-overlapped motion estimation regions (or merge estimation regions), the motion estimation operation may be set to be performed, not in parallel, but sequentially, between motion estimation regions within the largest coding unit (LCU), and motion estimation may be set to be performed in parallel for all prediction units (PU) which belong to one motion estimation region within the largest coding unit (LCU). Here, the size of the motion estimation region is smaller than the size of the largest coding unit (LCU), and the motion estimation region may have a square shape.

Whether to allow the parallel process by using common merge candidate blocks for prediction units (PU) within the motion estimation region may be differently set according to the size of the motion estimation region. For example, when the size of the minimum prediction unit (PU) is 4 x 4, if the size of the motion estimation region is 4 x 4, the sequential merge operation is performed for all prediction units (PU) within the largest coding unit (LCU) is performed, and only when the size of the motion estimation region is 8 x 8 or greater, the scheme of using common merge candidate blocks may be set to be allowed to enable parallel merge-parallel process for all prediction units (PU) within the motion estimation region.

A predetermined value is included in a picture parameter set (PPS) according to the size of the motion estimation region, and in order to inform of whether to allow the parallel merge process according to the size of the motion estimation region, the value may be transmitted from the encoder to the decoder. The predetermined value may be, for example, 0, 1, 2, 3, or 4, and the size of the motion estimation region may be 4 x 4, 8 x 8, 16 x 16, 32 x 32, and 64 x 64 respectively for 0, 1, 2, 3, and 4.

When the current prediction unit (PU) and the neighboring prediction unit (PU) belong to the same motion estimation region (when included in the same motion estimation region), the neighboring prediction unit (PU) is considered as "non-available", and when the current unit (PU) and the neighboring unit (PU) belong to different motion estimation regions, the neighboring prediction unit (PU) is considered as "available", thereby determining availability in the motion vector estimation in the common merge candidate blocks. When some of the neighboring common merge candidate blocks (neighboring prediction units (PU)) of the coding unit (CU) of the 8 x 8 size are not available, the above-stated merge operation may be performed by using the available neighboring common merge candidate blocks.

The block merge and encoding (or decoding) operation may be performed in parallel for the first prediction unit PU0 and the second prediction unit PU1 by using merge candidate blocks which are common to the first prediction unit PU0 and second prediction unit PU1 which are asymmetrically partitioned according to embodiments of the present invention.

Hence, the first process, which forms the list of merge candidate blocks for the block merge of the first prediction unit PUO, and the second process, which forms the list of merge candidate blocks for the block merge of the second prediction unit PU1, may be performed as one time process which forms a common merge candidate block, and the encoding (or decoding) process for the second prediction unit PU1 may be performed in parallel with the encoding (or decoding) process for the first prediction unit PU1, thereby significantly reducing the encoding time.

The common merge candidate blocks may be predetermined by a determined promise in the encoder and the decoder, and in this case, it may not be necessary for information for the common merge candidate blocks to be transmitted from the encoder to the decoder.

Further, in another embodiment of the present invention, when the 2N X 2N coding unit (PU) is vertically partitioned into partition PU0 block (prediction unit) of nL X 2N (here, nL = 2N X 3/4) and partition PU1 block (prediction unit) of nR X 2N (here, nR = 2N X 1/4), a common merge candidate block may be formed. Hence, according to another embodiment of the present invention, even when partitioned into partition PU0 block (prediction unit) and partition PU1 block (prediction unit) in a vertical direction, the first process which forms the list of merge candidate blocks for the block merge of the first prediction unit PU0 and the second process which forms the list of merge candidate blocks for the block merge of the second prediction unit PU1 may not be separately performed, but they may be performed as a process which forms one time common merge candidate block, and the encoding (or decoding) process for the second prediction unit PU1 may be performed in parallel with the encoding (or decoding) process for the first prediction unit PU1, thereby significantly reducing encoding time.

For example, 7 blocks may be included in the list of the common merge candidate blocks, but the number of blocks included in the list of the common merge candidate blocks is not limited thereto and may be formed of only 6, 5, or 4 candidate blocks.

As described above, when a common merge candidate block set is selected, a block having a motion parameter which is similar to the current block (prediction unit) is selected from among respective merge candidate blocks, and the selected block is merged with the current block. When the difference value between the motion parameter of the current block (prediction unit) and the motion parameter of each of the merge candidate blocks of the merge candidate block set is a threshold or less, a merge candidate block having a difference value of the threshold or less may be selected.

The current block and the selected merge candidate block are transmitted to decoder by applying the same motion parameter.

When the current block is merged with the selected merge candidate block, it may not be necessary for the motion parameter of the current block to be transmitted to the decoder, and the information on the merged block may be transmitted the decoder, and the decoder may decode the current block by using the motion parameter of the already decoded merge block.

At least one candidate block is selected from the common merge candidate block list for each of the first prediction unit (PU0) and the second prediction unit (PU1), and the selected candidate block information is transmitted to the decoder for the first prediction unit and the second prediction unit. As in the above-described embodiment, when the first prediction unit PU0 and the second prediction unit PU1 include the neighboring blocks of the first prediction unit PU0 and the second prediction unit PU1 as common merge candidate blocks, the first prediction unit PU0 and the second prediction unit PU1 may include common spatial merge candidate blocks within the coding unit (CU) having a predetermined size regardless of the partition type and index.

In the above-stated embodiment, it was illustrated that the first prediction unit PU0 and the second prediction unit PU1 include spatial merge candidate blocks composed of neighboring blocks of the first prediction unit PU0 and the second prediction unit PU1, but in another embodiment of the present invention, a temporal merge candidate block may be further included in the common merge candidate block list.

When the first prediction unit PU0 and the second prediction unit PU1 include the temporal merge candidate block as a common merge candidate block, the first prediction unit PU0 and the second prediction unit PU1 within the coding unit (CU) may use the reference picture index of a block at a predetermined, specific location among the spatial common merge candidate blocks as the reference picture index of the temporal motion vector prediction (MVP) for temporal merge candidate blocks. Here, in the case of the temporal motion vector prediction (MVP), the motion vector (MV) and the reference picture index are transmitted to the decoder. Here, the block at a predetermined, specific location may be set to be processed in parallel by using the previously encoded neighboring block which may be formed before reconstructing the motion parameter of the first prediction unit PU0 and the second prediction unit PU1 in the blocks included in the common merge candidate block list.

Further, the temporal merge candidate block may further include the bock at the location corresponding to the current prediction unit (PU) included in the previous picture of the current picture in the common merge candidate list.

Hence, In the 3D image encoding/decoding of the present invention, in the case of the asymmetric partition at the inter prediction, the parallel process of the first asymmetric partition PU0 and the second asymmetric partition PU1 by using the common merge candidate list is possible, thereby significantly reducing the encoding time.

### In-loop filtering method of multi-view image

In the case of encoding and decoding of the multi-view image, depth information on all view images or some view images of the multi-view image data (or texture) may be transmitted from the encoder to the decoder. Further, the camera parameter for a plurality of cameras of different visual points may be transmitted from the encoder to the decoder. Further, the encoder may transmit information for the reference view synthesis for the current view to the decoder.

When the depth information for all view images or some view images of the multi-view image data (or texture) is transmitted from the encoder to the decoder, the texture view component and the depth view component are encoded according to a predetermined order.

For example, when there is view 0 which is generated by a first camera and view 1 which is generated by a second camera whose visual point is spatially different from that of the first camera, access unit t may include texture view component T0t and depth view component D0t for view 0 and may include texture view component T1t and depth view component D0t for view 1. Further, access unit t+1 may include texture view component T0t+1 and depth view component D0t+1 for view 0 and texture view component T1t+1 and depth view component D1t+1 for view 1. In this case, the encoding may be performed in the order to T0t, T0t+1, D0t, and D0t+1 or may be encoded in the order of T0t+1, D0t+1, T0t, and D0t.

The decoder may compose an intermediate view image through a view synthesis prediction (VSP) process by using texture data and/or depth map data which is transmitted from the encoder. For example, with respect to views 1, 2, and 3, depth data for all the three views may not be transmitted to the decoder, the depth data for two views (e.g., view 1 and view 3) may be transmitted to the decoder, and the depth data for view 2 may be reconstructed in the decoder.

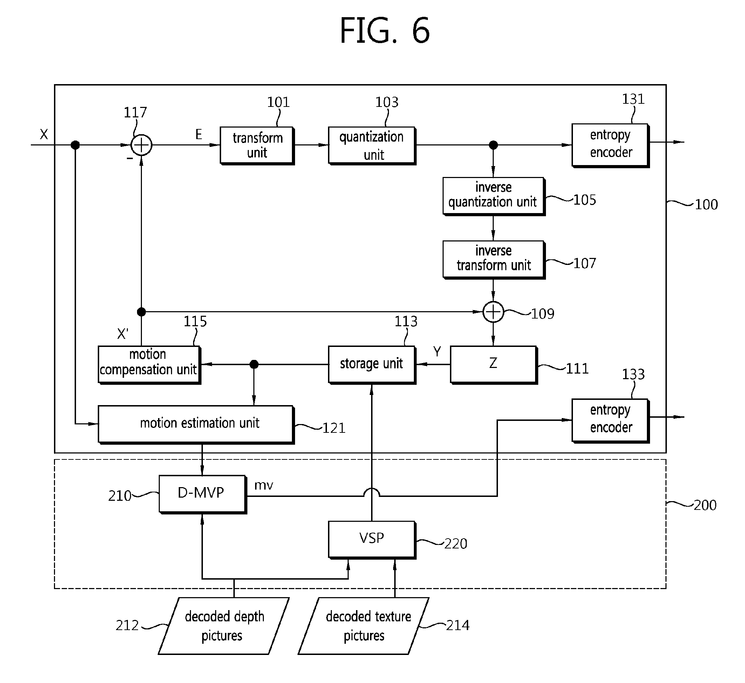

FIG. 6 is a block diagram of an encoder for processing an in-loop filtering for a multi-view image according to an embodiment of the present invention.

Referring to FIG. 6, the encoder according to an embodiment of the present invention includes a first encoder 100 and a second encoder 200. The first encoder 100 has the same configuration as that of the encoder of the existing H.264/AVC, performs intra prediction and inter prediction for an input image X by using a transform unit 101, a quantization unit 103, an inverse quantization unit 105, an inverse transform unit 107, a motion compensation unit 115, and a motion estimation unit 121, and performs deblocking filtering between block boundaries. The first encoder 100 has the same configuration as that of the encoder of the existing H.264/AVC, and the detailed description thereof is omitted here.

The second encoder 200 may include D-MVP 210 which performs a depth-based motion vector prediction (D-MVP) for texture encoding and an in-loop view synthesis predictor (VSP) 220 for encoding texture data and depth data.

In an embodiment of the present invention, the deblocking filter intensity of a specific block of the current view may be obtained by using the deblocking filter intensity of a block corresponding to the reference view which is taken by a camera whose visual point is spatially different from that of the current view.

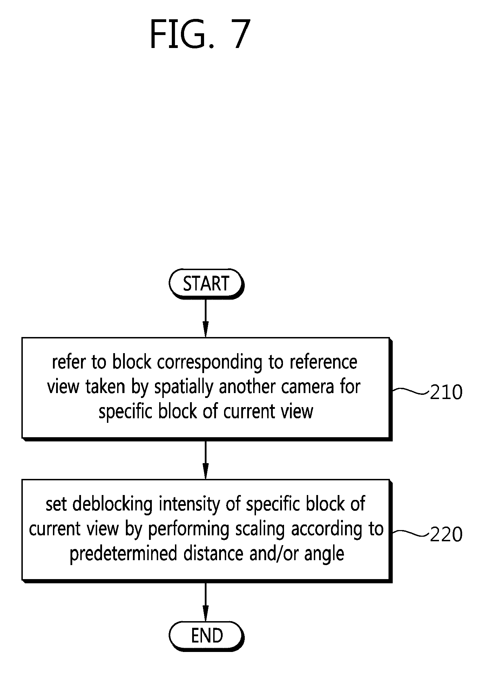

FIG. 7 is a flowchart illustrating an in-loop filtering method for a multi-view image according to an embodiment of the present invention.

Referring to FIG. 7, a block corresponding to the reference view which is taken by a camera whose visual point is different from that of a specific block of the current view is referred to (step 201), and scaling according to the distance and angle is performed in consideration of the distance and angle with the block corresponding to the reference view and the specific block of the current view so as to set the deblocking intensity of the specific block of the current view (step 220).

Specifically, when determining the deblocking filter intensity of the specific block of the current view, scaling according to the distance and angle is performed in consideration of the distance and angle with the block corresponding to the reference view and a specific block of the current view with reference to the block spatially corresponding to the reference view for the current view so as to set the deblocking intensity of the specific block of the current view. For example, when the current view is view 2 and the reference view of the current view is view 1 and view 3, the deblocking intensity of the specific block of the current block may be set performing scaling according to the distance and angle in consideration of the distance and angle between the specific block of the current view and the block corresponding to the view 1 with reference to the block corresponding to the view 1 which is the reference view. For example, assuming that the deblocking intensity of the block corresponding to the reference view is p and the scaling coefficient at the scaling is 1/2, the deblocking intensity of the specific block of the current view may become p/2. Assuming that the deblocking intensity of the block corresponding to the reference view is p and the scaling coefficient at the scaling is 1/4, the deblocking intensity of the specific block of the current view may become p/4.

Likewise, complexity at the deblocking process at the encoding and decoding of a multi-view image may be reduced by setting the deblocking intensity of a specific lock of the current view by performing scaling according to the distance and angle in consideration of the distance and angle between the specific block of the current view and the block corresponding to the reference view.

Further, according to a method of deblocking a multi-view image according to another embodiment of the present invention, when determining the deblocking filter intensity of the specific block of the current view, the deblocking intensity of the specific block of the current view may be set by performing scaling according to the distance and angle in consideration of the distance and angle between the specific block of the current view and the block corresponding to the reference picture by referring to the block corresponding to the reference picture which is temporally earlier or later than that of the specific block of the current block.

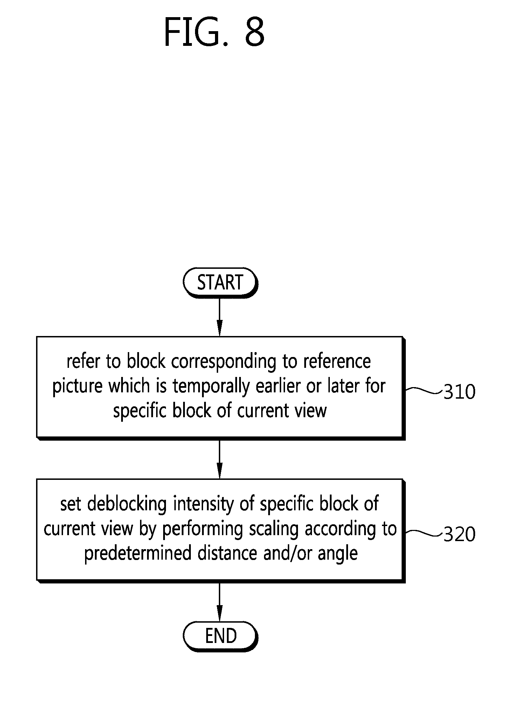

FIG. 8 is a flowchart illustrating an in-loop filtering method for a multi-view image according to another embodiment of the present invention.

Referring to FIG. 8, a block corresponding to the reference view which is temporally earlier or later that the specific block of the current view is referred to (step 301), and scaling according to the distance and angle in consideration of the distance and angle between the specific block of the current view and the block corresponding to the reference view is performed so as to set the deblocking intensity of the specific block of the current view (step 320).

The above-stated in-loop filtering method or deblocking method may be applied to the decoder of the multi-view image, thereby reducing complexity of the decoder.

### intermediate depth view synthesis method of multi-view image

In the case of the encoding and decoding of the multi-view image, when multi-view image data (or texture) is transmitted from the encoder to the decoder for all views, the data, which is transmitted to the decoder, increases, and thus the encoding efficiency is lowered. Hence, the data may not be transmitted to all views, and the intermediate view synthesis may be performed by using at least two views which are transmitted to the decoder.

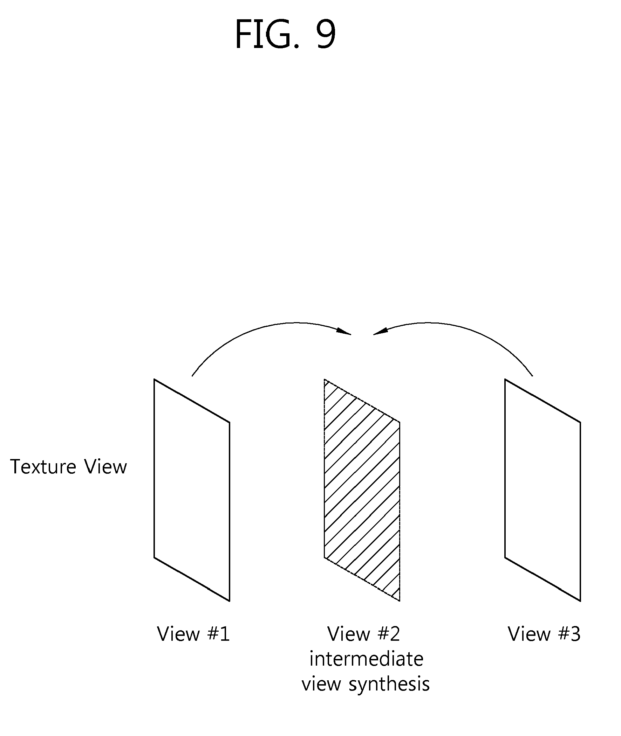

FIG. 9 is a conceptual diagram illustrating a process of an intermediate view synthesis in a decoder by using two views which have been transmitted to the decoder.

As illustrated in FIG. 9, with respect to views 1, 2, and 3, the texture view of view 1 and view 3 is transmitted from the encoder to the decoder, and the texture view of view 2 may be obtained by using the texture view of view 1 and view 3 which have already been transmitted to the decoder without being transmitted from the encoder to the decoder. For example, the average may be obtained by directly using 2 texture views of view 1 and view 3 which have been transmitted to the decoder, interpolation according to the distance is performed, or predetermined scaling according to the distance and angle may be performed.

Further, in the case of encoding and decoding of the multi-view image, when the depth view is transmitted from the encoder to the decoder for all views, the data, which is transmitted to the decoder, increases, and thus the encoding efficiency is lowered. Hence, the intermediate depth view synthesis may be performed by using at least one depth view which has been transmitted to the decoder without transmitting some depth views.

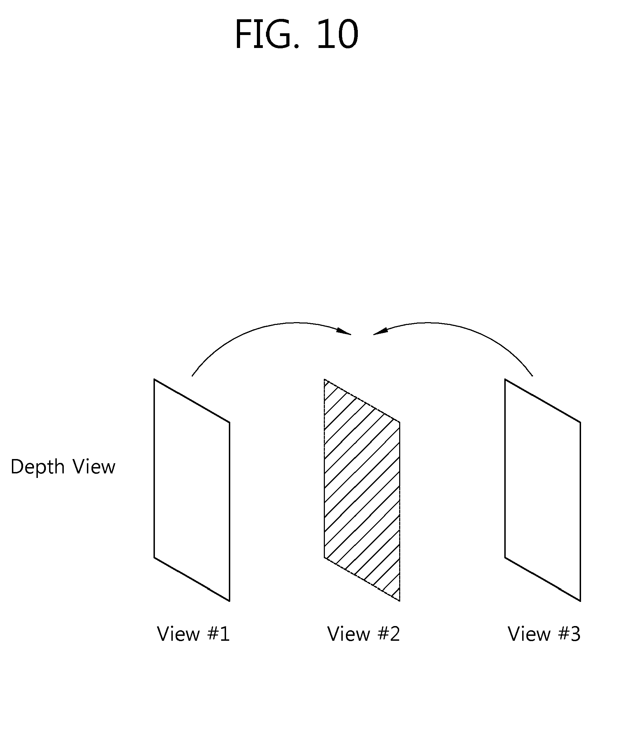

FIG. 10 is a conceptual diagram illustrating a process of synthesizing an intermediate depth view in a decoder by using 2 depth views which have been transmitted to the decoder.

As illustrated in FIG. 10, with respect to views 1, 2, and 3, the depth view of view 1 and view 3 may be transmitted from the encoder to the decoder, the texture view of view 2 may not be transmitted from the encoder to the decoder, and the texture view of view 2 may be obtained by using the depth view of view 1 and view 3 which have already been transmitted to the decoder. For example, the average may be obtained by using all depth views of view 1 and view 3 which have been transmitted to the decoder, interpolation according to the distance may be performed, or predetermined scaling according to the distance and angle may be performed.

As illustrated in FIG. 9, when the texture view of view 1 and view 3 is transmitted from the encoder to the decoder, and the texture view of view 2 is not transmitted from the encoder to the decoder and is obtained through the intermediate view synthesis by using the texture view of view 1 and view 3 which have been transmitted to the decoder, according to an embodiment of the present invention, the depth view of view 2 may be obtained by using texture view 3 which is generated through the synthesis of one depth view which has already been transmitted to the decoder, and the intermediate view in order to enhance the encoding efficiency by reducing the data which is transmitted to the decoder by reducing the view data amount which is transmitted from the encoder to the decoder.

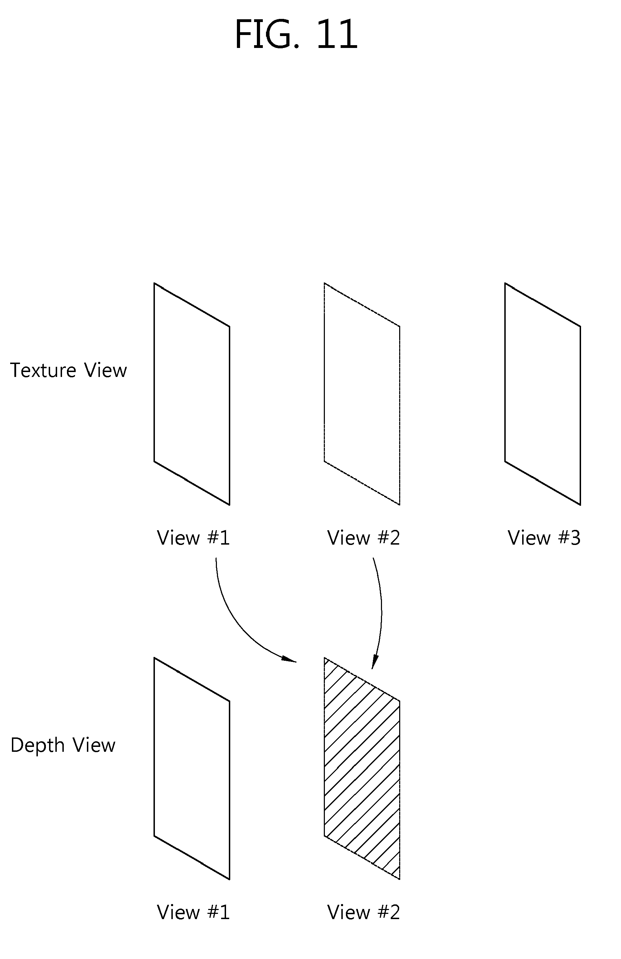

FIG. 11 is a conceptual diagram illustrating a process of an intermediate depth view synthesis in a decoder by using one depth view which has been transmitted to a decoder according to an embodiment of the present invention.

First, as illustrated in FIG. 9, it is assumed that the texture view of view 2 is obtained through a intermediate view synthesis by using the texture view of view 1 and view 3 which have been transmitted from the encoder to the decoder. Referring to FIG. 11, under the above assumption, the depth view of view 1 is transmitted from the encoder to the decoder, and the depth view of view 2 may be obtained by using the texture view of view 2 which is obtained through the intermediate view synthesis with the depth view of view 1 which has already been transmitted to the decoder. Specifically, as illustrated in FIG. 11, in the state where the texture view and the depth view for view 1 have been transmitted from the encoder to the decoder and the texture view of view 2 has been obtained through the intermediate view synthesis of FIG. 9, the depth view of view 2 may be predicted and obtained from the depth view of view 1 by using the location, distance, and/or angle between the texture view of view 1 and the texture view of view 2. For example, the location, distance, and/or angle between the depth view of view 1 and the depth view of view 2 may be analogized from the location, distance and/or angle relationship between the texture view of view 1 and the texture view of view 2 so as to obtain the average, interpolation according to the distance may be performed, or predetermined scaling according to the distance or angle may be performed so as to predict and obtain the depth view of view 2.

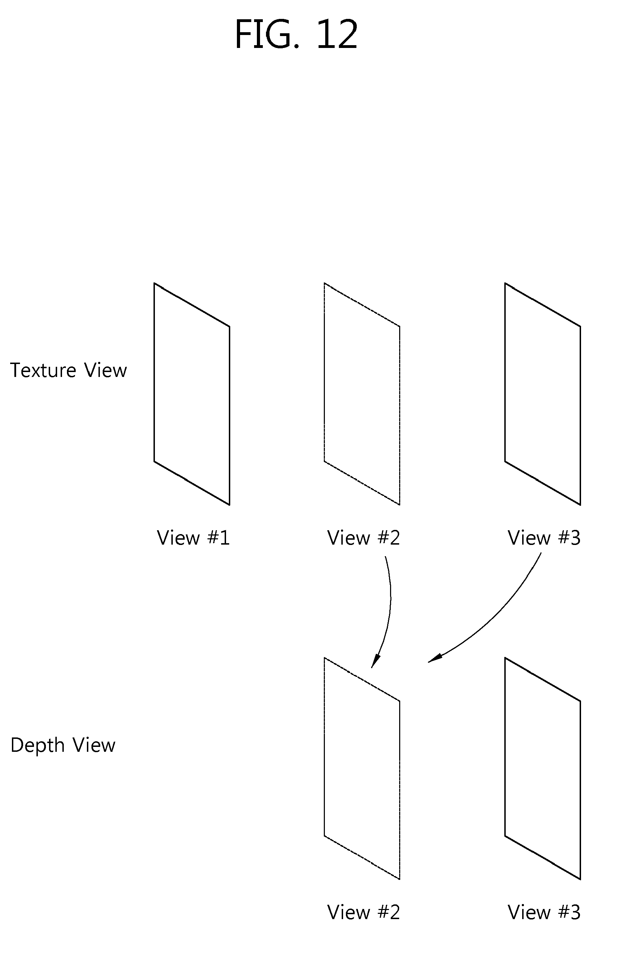

FIG. 12 is a conceptual diagram illustrating a process of an intermediate depth view synthesis in a decoder by using one depth view which has been transmitted to the decoder according to another embodiment of the present invention.

First, as illustrated in FIG. 9, it is assumed that the texture view of view 2 is obtained through the intermediate view synthesis by using the texture view of view 1 and view 3 which have been transmitted from the encoder to the decoder. Referring to FIG. 12, under the above assumption, with respect to views 1, 2, and 3, the depth view of view 3 is transmitted from the encoder to the decoder, and the depth view of view 2 may be obtained by using the texture view of view 2 which is obtained through the intermediate view synthesis with the depth view of view 3 which has been already transmitted to the decoder. Specifically, as illustrated in FIG. 12, in the state where the texture view and depth view have been transmitted from the encoder to the decoder for view 3 and the texture view of view 2 has been obtained through the intermediate view synthesis of FIG. 9, the depth view of view 2 may be predicted and obtained from the texture view of view 3 by using the location, distance, and/or angle between the texture view of view 3 and the texture view of view 2. For example, the location, distance, and/or angle between the texture view of view 3 and the texture view of view 2 may be analogized from the location, distance and/or angle relationship between the depth view of view 3 and the depth view of view 2 so as to obtain the average, interpolation according to the distance may be performed, or predetermined scaling according to the distance or angle may be performed so as to predict and obtain the depth view of view 2.

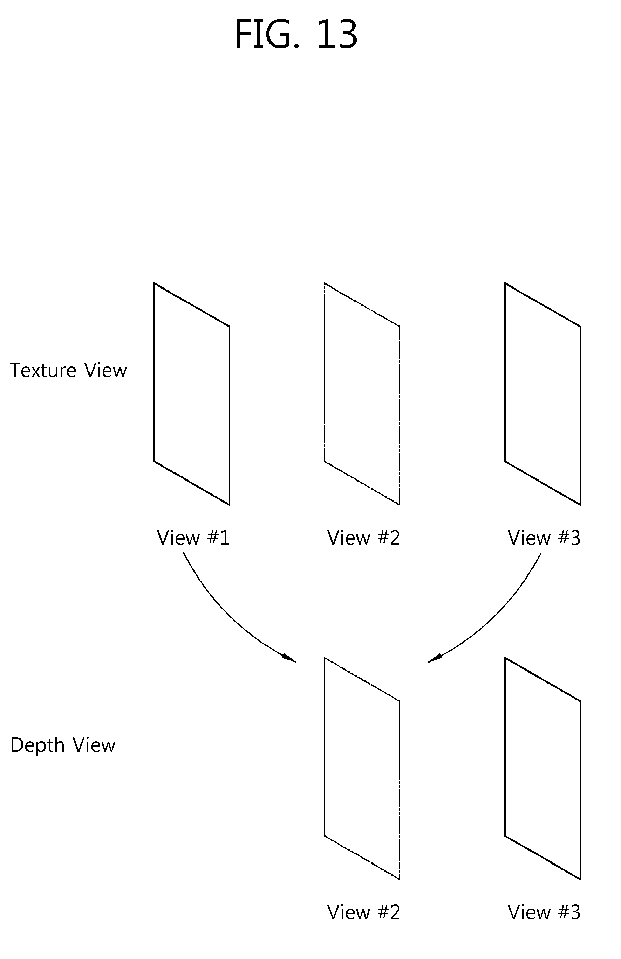

FIG. 13 is a conceptual diagram illustrating a process of an intermediate depth view synthesis in a decoder by using one depth view which has been transmitted to the decoder according to another embodiment of the present invention.

First, as illustrated in FIG. 9, it is assumed that the texture view of view 2 has been obtained through the intermediate view synthesis by using the texture view of view 1 and view 3 which have been transmitted from the encoder to the decoder. Referring to FIG. 13, under the assumption, with respect to views 1, 2, and 3, the depth view of view 3 is transmitted from the encoder to the decoder, and the depth view of view 2 may be obtained by using the depth view of view 3, which has already been transmitted to the decoder, and the texture view of view 1 and view 3 which have been transmitted from the encoder to the decoder. Specifically, as illustrated in FIG. 13, with respect to view 3, in the state where the texture view and the depth view have been transmitted from the encoder to the decoder and the texture view of view 1 has also been obtained as in FIG. 9, the depth view of view 2 may be predicted and obtained by using the location, distance, and and/or angle between the texture view of view 3 and the texture view of view 1. For example, the depth view of view 2 may be obtained through interpolation according to the distance by analogizing the location, distance, and/or angle between the depth view of view 3 and the depth view of view 2 from the location, distance, and/or angle relation between the texture view of view 3 and the texture view of view 1, or the depth view of view 2 may be predicted and obtained through predetermined scaling according to the distance and angle.

Further, in the above-described embodiments of the present invention with reference to FIGS. 9 to 12, the motion information (or motion parameter) for the depth view of view 2 may reuse the motion information of the block co-located to the texture view component of view 2. The motion information (or motion parameter) may include a block type (macro block type and sub-macro block type), a reference picture index, a candidate motion vector list, or a motion vector. In this case, the reuse of the motion information of the co-located block within the text view of the same view as that of the depth view may be notified by signaling a predetermined flag from the encoder to the decoder, and in the decoder, when receiving the flag, the motion information of the co-located block within the texture view of the same view as that of the depth view may be reused.

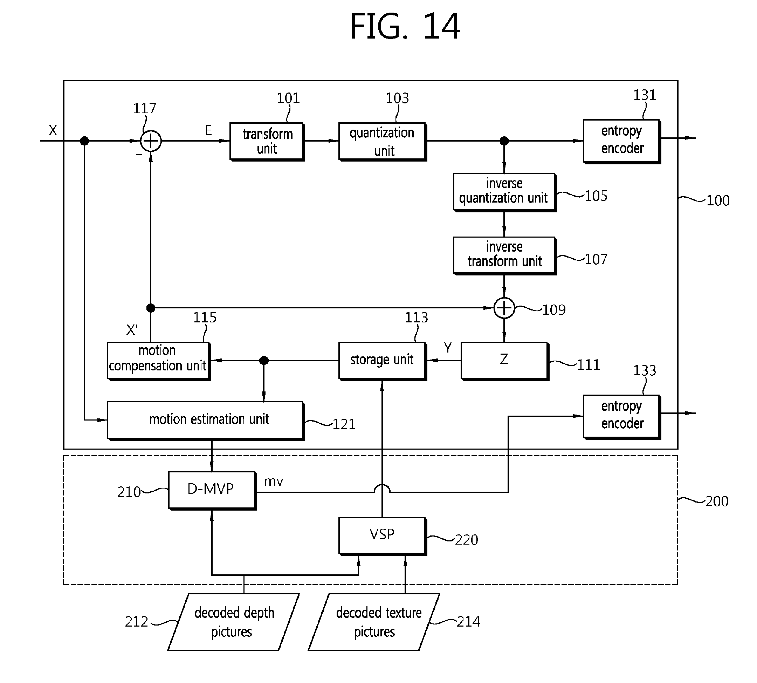

FIG. 14 is a block diagram illustrating an encoder for processing the operation of the intermediate depth view synthesis for a multi-view image according to an embodiment of the present invention.

Referring to FIG. 14, the encoder according to an embodiment of the present invention includes a first encoder 100 and a second encoder 200. The first encoder 100 performs intra prediction and inter prediction for an input image X by using the motion compensation unit 115 and the motion estimation unit 121 with the same configuration as that of the encoder of the existing H.264/AVC, and transmits the encoded image data to the decoder as a bit stream through the transform unit 101, the quantization unit 103, the inverse quantization unit 105, the inverse transform unit 107, and the entropy encoders 131 and 133. The first encoder 100 of FIG. 14 has the same configuration as that of the encoder of the existing H.264/AVC, and the detailed description thereof is omitted here.

The second encoder 200 may include a depth-based motion vector prediction (D-MVP) 210 which performs motion vector prediction based on the decoded depth picture of the multi-view image and a view synthesis prediction (VSP) 220 for the encoding of texture data and depth data by using the decoded texture picture and decoded depth picture.

The process of an intermediate depth view synthesis in the decoder by using one depth view which has been transmitted to the decoder according to embodiments of the present invention is not illustrated in the drawings, but may be performed in the view synthesis prediction (VSP) of the decoder.

According to a method and apparatus for encoding and decoding a 3D image according to the present invention, candidates for the prediction motion vector may be efficiently selected for a 3D image having depth information.

According to a method and apparatus for encoding a 3D image according to the present invention, only in the case where both the current prediction unit and a neighboring block belong to the same group and the depth of the current prediction unit is the same as the depth of the neighboring block, the neighboring block having the same depth as that of the current prediction unit is selected as the top priority in the motion vector predictor candidate list, thereby reducing complexity and enhancing accuracy at the time of selecting a motion vector of the current prediction unit of a 3D image.

According to an in-loop filtering method for a multi-view image, when encoding and decoding a multi-view image, complexity of the deblocking process may be reduced by setting the intensity of a specific block of the current view by performing scaling according to the distance and angle in consideration of the distance and angle with the block corresponding to a specific block of the current view and a reference view of the current view.

According to the method of an intermediate depth view synthesis according to embodiments of the present invention, some depth views of the multi-view image are not transmitted and are obtained through the intermediate depth view synthesis by using at least one depth view which has been transmitted to the decoder, and thus the amount of the depth view data, which is transmitted from the encoder and/or decoder of the multi-view image to the decoder, may be reduced, thereby enhancing the encoding efficiency.

Until now, the description has been made with reference to drawings and embodiments, but it does not mean that the scope of rights of the present invention is limited by the drawings or embodiments. It should be understood that one of ordinary skill in the art can modify and change the present invention within the scope of the idea of the present invention disclosed in claims below.

## Claims

1. A method of encoding a current prediction unit in a 3-dimensional image, the method comprising:
selecting a motion vector of a neighboring block which satisfies at least one of a same group and a same depth as that of the current prediction unit from among already encoded neighboring blocks of the current prediction unit, as a candidate prediction motion vector of the current prediction unit; and
predicting a motion vector of the current prediction unit by performing an inter prediction based on the candidate prediction motion vector so as to transmit the predicted motion vector to a decoder.

2. A method of decoding a current prediction unit in a 3-dimensional image, the method comprising:
entropy-decoding, inverse-quantizing, and inverse- transforming a received bit stream;
selecting a motion vector of a neighboring block which satisfies at least one of a same group and a same depth as that of the current prediction unit from among already encoded neighboring blocks of the current prediction unit based on the inverse-transformed bit stream, as a candidate prediction motion vector of the current prediction unit; and
reconstructing the image by predicting the motion vector of the current prediction unit by performing an inter prediction based on the candidate prediction motion vector.

3. A method of in-loop-filtering for a multi-view image, the method comprising:
referring to a block corresponding to a reference view for a specific block of a current view; and
setting a deblocking intensity of the specific block of the current view by performing scaling according to a distance between the specific block of the current view and the block corresponding to the reference view.

4. A method of an intermediate depth view synthesis for a multi-view image having a texture view and a depth view for each of a first view, a second view, and a third view by a decoder, the method comprising:
performing an intermediate view synthesis for a the texture view of the first view and the texture view of the third view which are received from an encoder; and
obtaining the texture view of the second view from the texture view of the first view and the texture view of the third view through the intermediate view synthesis.

5. The method of claim 1, further comprising:
obtaining the depth view of the second view by using a texture of the second view which has been generated through the intermediate view synthesis with one of the depth view of the first view and the depth view of the third view which have been received from the encoder.

6. The method of claim 1, wherein motion information for the depth view of the second view reuses motion information of a block co-located to a texture view component of the second view.

7. The method of claim 3, wherein, when receiving a predetermined flag from the encoder, motion information of a block co-located to a texture view component of the second view is reused as motion information for the depth view of the second view.
